# EUROPÄISCHE PATENTSCHRIFT

(11) **EP 1 008 431 B1**
(45) Veröffentlichungstag und Bekanntmachung des Hinweises auf die Patenterteilung: **11.09.2002**
(21) Anmeldenummer: 99122877.6
(22) Anmeldetag: 18.11.1999
(51) Int. Cl.: B29C 44/04, B60R 21/20

(54) **Geformte Armaturentafeln enthaltend Polyisocyanat-Polyadditionsprodukte**
Moulded dashboards containing polyisocyanate-polyaddition products
Tableaux de bord moulés contenant des produits de polyaddition de polyisocyanate

(30) Priorität: 10.12.1998 DE 19856964
(43) Veröffentlichungstag der Anmeldung: 14.06.2000
(73) Patentinhaber: BASF AKTIENGESELLSCHAFT, 67056 Ludwigshafen (DE)
(72) Erfinder: Partusch, Georg, 86932 Pürgen (DE); Sander, Horst, 32351 Stemwede (DE); Bauer, Michael, 80339 München (DE)

(56) Entgegenhaltungen:
- EP-A- 0 056 939
- US-A- 4 582 658
- US-A- 5 179 132

## Beschreibung

Die Erfindung betrifft Armaturentafeln sowie ein Verfahren zu deren Herstellung.

Polyisocyanat-Polyadditionsprodukte, die üblicherweise Polyurethan- und gegebenenfalls Polyisocyanuratstrukturen aufweisen, sind allgemein bekannt. Für viele Anwendungen dieser Produkte ist es vorteilhaft, Polyurethane mit verschiedenen mechanischen und physikalischen Eigenschaften in einem Produkt, beispielsweise einem Formkörper zu kombinieren. So können beispielsweise Sitzpolsterungen Polyurethanweichschaumstoffe unterschiedlicher Härte enthalten, um bei optimalem Sitzkomfort gleichzeitig einen hervorragenden Seitenhalt zu gewährleisten. Die Herstellung dieser Produkte erfolgt gemäß EP-A-0 056 939 in einer Form in einem parallelen Verfahren.

Entsprechende Anforderungen, d.h. verschiedene Polyurethane mit unterschiedlichen Eigenschaften in einem Formteil zu kombinieren, werden zunehmend auch an Armaturentafeln in Automobilen gestellt, hinter denen sich Airbags befinden (sog. Hidden-Airbag). Bei der Auslösung dieser Airbags dürfen keine Schaum-, Haut- oder Trägerpartikel der Instrumententafel in den Innenraum intrudieren, womit hohe Anforderungen an die mechanischen Eigenschaften des Verkleidungsmaterials (Dekorschicht) und im besonderen des darunter gelegenen Schaumstoffs gestellt werden. Derartig hohe Anforderungen werden allerdings lediglich in den Bereichen der Airbagabdeckung gestellt. Der Rest beispielsweise der Armaturentafel sollte hingegen aufgrund der geringeren Kosten und des geringeren Gewichts mit einem üblichen Polyurethansystem herstellbar sein. Da zudem die gesamte Armaturentafel ein einheitliches Erscheinungsbild mit durchgängiger Oberfläche aufweisen muß, wurden diese Produkte bislang durchgängig mit einer Reaktionsmischung hergestellt.

Der vorliegenden Erfindung lag daher die Aufgabe zugrunde, Armaturentafeln zu entwickeln, die auf verschiedenen Polyisocyanat-Polyadditionsprodukten mit unterschiedlichen Eigenschaften beruhen.

Diese Armaturentafeln sollten möglichst in einem Schritt herstellbar sein und insbesondere über eine durchgängige Oberfläche ohne Markierung oder Abzeichnung verfügen. Insbesondere sollten Armaturentafeln entwickelt werden, die mit mindestens zwei verschiedenen Reaktionsmischungen zur Herstellung von Polyurethanen in einem Schritt produziert werden können. Dabei sollte auf die Verwendung von Einrichtungen, die ein Vermischen der Reaktionsmischungen in der Form verhindern, verzichtet werden.

Diese Aufgabe wurde erfindungsgemäß durch die Armaturentafeln gemäß Anspruch 1 und das Verfahren gemäß Anspruch 3 zu deren Herstellung gelöst.

Die erfindungsgemäßen Armaturentafeln, die üblicherweise auf Polyurethanen und/oder Polyisocyanuraten, bevorzugt Polyurethanen basieren, werden erfindungsgemäß in einer Form in einem Arbeicsschritt hergestellt wobei die in die Form eingetragenen Reaktionsmischungen in der Form bevorzugt in direktem Kontakt zueinander gebracht werden. Erfindungsgemäß kann bei der Herstellung der Armaturentafeln in der Form auf den Einsatz von Einrichtungen, beispielsweise Trennstege oder Folien, die ein Vermischen der verschiedenen Reaktionsmischungen in der Form verhindern, verzichtet werden.

Damit ist die wirtschaftlich vorteilhafte Herstellung von Armaturentafeln möglich, die in unterschiedlichen Bereichen verschiedene mechanische Eigenschaften, beispielsweise hinsichtlich ihrer Zugfestigkeit und Dehnung, aufweisen.

Bevorzugt handelt es sich bei den Polyisocyanat-Polyadditionsprodukten um halbharte Schaumstoffe, besonders bevorzugt halbharte Polyurethanschaumstoffe.

Bei der Herstellung der erfindungsgemäßen Armaturentafeln wird die Umsetzung bevorzugt in Gegenwart von sowohl (c) Treibmitteln als auch (d) Katalysatoren durchgeführt.

Die mindestens zwei, bevorzugt zwei verschiedenen Reaktionsmischungen können sich in den Komponenten (b), (c), (d) und/oder (e) unterscheiden. Auch können sich die Reaktionsmischungen in der Art der Isocyanatkomponente (a) unterscheiden, beispielsweise in der verwendeten Menge an (a) in Bezug auf auf die Menge an (b) in der Reaktionsmischung. Bevorzugt unterscheiden sich die Reaktionsmischungen in der Zusammensetzung, beispielsweise in den Mengenverhältnissen, der gegenüber Isocyanaten reaktiven Verbindungen (b) und/oder den Isocyanaten (a).

Die Dichten der verschiedenen Polyisocyanat-Polyadditionsprodukte, die mit den verschiedenen Reaktionsmischungen hergestellt werden, weichen bevorzugt bei der gemeinsamen Herstellung einer Armaturentafel voneinander um 0 bis 20 % voneinander ab.

Als Isocyanate (a) werden bevorzugt (cyclo)aliphatische und/oder insbesondere aromatische Polyisocyanate, bevorzugt Diisocyanate, eingesetzt. Zur Herstellung der Polyisocyanat-Polyadditionsprodukte eignen sich besonders aromatische Diisocyanate, vorzugsweise Diphenylmethandiisocyanat (MDI). Die Isocyanate können in Form der reinen Verbindung oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden.

Als (b) gegenüber Isocyanaten reaktiven Verbindungen können beispielsweise Verbindungen mit mindestens zwei mit Isocyanat reaktiven Wasserstoffatomen Verwendung finden, beispielsweise Polycarbonatdiole, Polyetherpolyalkohole und/oder Polyesterpolyalkohole, im Folgenden auch als Polyole bezeichnet. Bevorzugt sind Polyole mit einer Funktionalität von 2 bis 8, insbesondere 2 bis 5, und einem Molekulargewicht von 500 bis 10000, insbesondere 1000 bis 6000, eingesetzt. Polyetherole sind auf Grund ihrer höheren Hydrolysestabilität besonders bevorzugt. Die Polyetherole werden zumeist durch basisch katalysierte Anlagerung von niederen Alkylenoxiden, insbesondere Ethylenoxid und/oder Propylenoxid, an 2 bis 8-funktionelle, insbesondere 2- bis 5-funktionelle Startsubstanzen, hergestellt.

Zu den gegenüber Isocyanaten reaktiven Verbindungen (b) können auch Kettenverlängerungs- und/oder Vernetzungsmittel gehören. Bei den Kettenverlängerungsmitteln handelt es sich überwiegend um 2-oder dreifunktionelle Alkohole mit Molekulargewichten von 60 bis 499, beispielsweise Ethylenglykol, Propylenglykol, Butandiol-1,4, Pentandiol-1,5. Bei den Vernetzungsmitteln handelt es sich um Verbindungen mit Molekulargewichten von 60 bis 499 und üblicherweise 3 bis 8 aktiven H-Atomen, vorzugsweise Aminen und besonders bevorzugt Alkoholen, beispielsweise Glyzerin, Trimethylolpropan und/oder Pentaerythrit. Die Produkte können sowohl in Anwesenheit als auch in Abwesenheit von Kettenverlängerungs- und/oder Vernetzungsmitteln hergestellt werden.

Als (c) Treibmittel kann bei der Herstellung der Produkte Wasser und/oder andere chemisch und/oder physikalisch wirkende Treibmittel eingesetzt werden. Beispiele für physikalische Treibmittel sind (cyclo)aliphatische Kohlenwasserstoffe, vorzugsweise solche mit 4 bis 8, besonders bevorzugt 4 bis 6 und insbesondere 5 Kohlenstoffatomen, beispielsweise Cyclopentan, n-Pentan und/oder Isopentan, teilhalogenierte Kohlenwasserstoffe oder Ether, Ketone oder Acetate. Bevorzugtes Treibmittel für die Produktion von Halbhartschaumstoffen ist Wasser. Die Menge der eingesetzten Treibmittel richtet sich nach der angestrebten Dichte der Schaumstoffe.

Die Herstellung der Produkte erfolgt zumeist in Anwesenheit von üblichen (d) Katalysatoren, beispielsweise tertiären Aminen oder organischen Metallverbindungen, insbesondere Zinnverbindungen.

Die Umsetzung erfolgt gegebenenfalls in Anwesenheit von (e) Hilfs- und/oder Zusatzstoffen, wie Füllstoffen, Zellreglern, oberflächenaktiven Verbindungen, Stabilisatoren, inneren Trennmittteln, Antioxidantien, UV-Schutzmitteln und/oder Farbstoffen.

Zur Herstellung der Polyisocyanat-Polyadditionsprodukte werden die Isocyanate und die gegenüber Isocyanaten reaktiven Verbindungen bevorzugt in solchen Mengen zur Umsetzung gebracht, daß das Äquivalenzverhältnis von NCO-Gruppen der Isocyanate zur Summe der reaktiven Wasserstoffatome der gegenüber Isocyanaten reaktiven Verbindungen 0,7 : 1 bis 1,3 : 1 1, vorzugsweise 0,9 : 1 bis 1,1 : 1 beträgt. Der bevorzugte Gehalt an Wasser als Treibmittel (c), bezogen auf das Gewicht von (b), beträgt bevorzugt 1,8 bis 3,5 Gew.-%.

Die Armaturentafeln werden vorteilhafter weise nach dem one-shot-Verfahren oder nach dem Prepolymerverfahren, beispielsweise mit Hilfe der Hochdruck- oder Niederdruck-Technik in offenen, bevorzugt temperierbaren Formwerkzeugen, beispielsweise metallischen Formwerkzeugen hergestellt.

Als besonders vorteilhaft hat es sich erwiesen, nach dem Zweikomponentenverfahren zu arbeiten und für die jeweilige Reaktionsmischung die gegenüber Isocyanaten reaktiven Verbindungen und gegebenenfalls das oder die Treibmittel, die Katalysatoren und/oder Hilfs- und/oder Zusatzstoffe in der Komponente (A) zu vereinigen und als Komponente (B) die Isocyanate zu verwenden.

Um eine möglichst definierte Verteilung der verschiedenen Polyisocyanat-Polyadditionsprodukte in den Armaturentafeln zu erreichen und eine Vermischung der Reaktionsmischung zu verhindern, werden bevorzugt Reaktionsmischungen verwendet, deren Start- und Steigzeiten maximal 20 % voneinander abweichen. Dadurch kann man erreichen, daß bei einer weitgehend gleichzeitigen Befüllung einer Form mit den Reaktionsmischungen diese annähernd gleich schnell reagieren und sich somit nicht gegenseitig in der Form überlagern. Die Einstellung von annähernd gleichen Start- und Steigzeiten der verschiedenen Reaktionsmischungen kann, falls beispielsweise die gleiche Isocyanatkomponente (a) und unterschiedliche (b)-Komponenten verwendet werden, durch Zugabe von üblichen Katalysatoren (c) zu der langsameren Reaktionsmischung erfolgen.

Die Ausgangskomponenten der jeweiligen Reaktionsmischung werden bevorzugt in Abhängigkeit vom Anwendungsfall bei einer Temperatur von 0 bis 100°C, vorzugsweise von 15 bis 60°C, gemischt. Bevorzugt werden die Reaktionsmischungen anschließend getrennt in das offene Formwerkzeug eingebracht. Eine Vermischung der verschiedenen Reaktionsmischungen miteinander wird bevorzugt vermieden. Die Temperatur des Formwerkzeugs beträgt üblicherweise >30 °C, bevorzugt 35 bis 60 °C.

Die Eintragung der verschiedenen Reaktionsmischungen in die Form kann bevorzugt über getrennte Zuführeinrichtungen, beispielsweise Mischköpfe, an bevorzugt verschiedenen Positionen in der Form erfolgen, damit eine Vermischung der verschiedenen Reaktionsmischungen in der Form vor der Reaktion möglichst vermieden wird. Das Befüllen der Form mit den Reaktionsmischungen kann gleichzeitig oder minimal zeitversetzt erfolgen, wobei bevorzugt vor Ablauf der Startzeit der Reaktionsmischung, die als erstes in die Form gefüllt wurde, mit dem Befüllen aller Reaktionsmischungen begonnen wird. Besonders bevorzugt werden die verschiedenen Reaktionsmischungen gleichzeitig in die Form gefüllt. Besonders bevorzugt erfolgt das Befüllen der Form mit den Reaktionsmischungen derart, daß man die Reaktionsmischungen durch getrennte Mischköpfe an verschiedenen Positionen oder mit einem Mehrkomponentenmischkopf mit getrennten Komponentenkreisläufen in die Form einbringt, wobei die in die Form eingetragenen Reaktionsmischungen in der Form in direktem Kontakt zueinander gebracht werden.

Die Umsetzung der verschiedenen Reaktionsmischungen erfolgt bevorzugt auf einer Dekorfolie, wobei besonders bevorzugt eine gemeinsame Dekorfolie für die verschiedenen Polyisocyanat-Polyadditionsprodukte in der Form verwendet wird. Dadurch wird ein einheitliches optisches Erscheinungsbild der gesamten Armaturentafel gewährleistet. Bevorzugt kann zudem ein Träger zur Stabilisierung des Formteils in Kontakt mit den Reaktionsmischungen bei deren Umsetzung gebracht werden. Bei diesen bevorzugt eigenstabilen Trägern kann es sich beispielsweise um kompakte Streben oder Platten, beispielsweise aus Stahl, Aluminium oder üblichen Kunststoffen, handeln. Besonders bevorzugt werden die erfindungsgemäßen Armaturentafeln somit auf ihrer einen Seite von einer Dekorfolie abgedeckt und auf der davon abgewandten Seite mit einem Träger stabilisiert. Die Herstellung kann somit besonders bevorzugt derart erfolgen, daß man in der Form die Dekorfolie plaziert, die Reaktionsmischungen in die Form auf die Dekorfolie wie beschrieben einträgt und auf und/oder in die Reaktionsmischungen den Träger mechanisch oder pneumatisch befestigt. Das ausreagierte Polyisocyanat-Polyadditionsprodukt, insbesondere der Polyurethanhalbhartschaumstoff, wird somit, bevorzugt haftend, von Deck (Dekorfolie)- und Trägerschicht eingeschlossen. Besonders bevorzugt wird die Trägerschicht bei der Umsetzung der Reaktionsmischungen punktiert, um das Bauteil zu entgasen. Dies wird bevorzugt zu dem Zeitpunkt durchgeführt, wenn die reagierenden Reaktionsmischungen, beispielsweise aufgrund der Reaktion des Wasser mit den Isocyanatgruppen, ihren höchsten Treibgasdruck aufgebaut haben.

Vor dem Öffnen der Form und der Entnahme der Armaturentafel können bei der Verwendung von Formen mit aufblasbaren Dichtungen bevorzugt die bei der Umsetzung der Reaktionsmischungen aufgeblasenen Dichtungen abgeblasen werden, d.h. die Form wird vorentriegelt, um Kernrisse in der Mitte des Bauteils zu vermeiden.

Die Erfindung wird in den nachfolgenden Ausführungsbeispielen näher erläutert.

### Beispiele

In der Tabelle 1 sind die zwei verschiedene Reaktionsmischungen zur Herstellung von halbharten Polyurethanschäumen sowie deren Reaktionsparameter und die mechanischen Eigenschaften der damit hergestellten Produkte dargestellt.

**Tabelle 1**

| Reaktionsmischung | (1) Elastoflex® E 3320/6 | (2) Elastoflex® E 3320/6 |
|---|---|---|
| Rohdichte, freiverschäumt [kg/m3] | 75 | 70 |
| Startzeit [s] | 19 | 20 |
| Steigzeit [s] | 120 | 120 |
| Rohdichte formverschäumt [kg/m3] | 140 | 158 |
| Zugfestigkeit [kPa] | 360 | 555 |
| Reißdehnung [%] | 50 | 69 |
| Weiterreißfestigkeit [N/mm] | 0,79 | 0,5 |

Elastoflex® E 3320/6 ist ein Halbhartschaumsystem der Elastogran GmbH basierend auf einer A-Komponente (Polyol-Komponente) und einer B-Komponente (Isocyanat-Komponente). Es ist kommerziell bei der Elastogran GmbH erhältlich. Es wird zur Hinterschäumung von tiefgezogenen ABS-, PVC-, PUR- und anderen Folien im Fahrzeugsektor, z.B. zur Herstellung von Armaturentafeln, eingesetzt.

Die Reaktionsmischungen (1) und (2) unterscheiden sich in der Verwendung von unterschiedlichen Isocyanatkomponenten (a), wobei für (1) ein polymeres MDI und für (2) ein Prepolymer auf der Basis von 2-funktionellem MDI verwendet wurden.

Das Mischungsmasseverhältnis von A:B-Komponente betrug 100:45 für die Reaktionsmischung 1 und 100:55 für die Reaktionsmischung 2 In diesen Versuchen wurde wie in der Produktion von Armaturentafeln eine Dekorfolie und eine eigenstabile Trägerschicht vor dem Eintrag der Reaktionsmischungen in der Form plaziert. Der ausreagierte Halbhartschaum befand sich somit zwischen diesen Schichten. Die zwei Reaktionsmischungen 1 und 2 wurden getrennt über jeweils eine Dosieranlage in ein Instrumententafelformwerkzeug mit einer Grundfläche von 2000 x 500 mm an getrennten Stellen nacheinander eingetragen. Zunächst wurde die Reaktionsmischung 1 in die linke Hälfte der Form in einer ca. 400 mm langen Zeile mit Hilfe eines Roboters eingetragen. Anschließend trug ein zweiter Roboter das Reaktionsgemisch 2 ebenfalls in einer ca. 400 mm langen Zeile in die rechte Kavität, in der sich der Airbag-Bereich befindet, ein. Bei der Zeilenprogrammierung wurde darauf geachtet, daß vertikale Flächen der Armaturentafel mit dem flüssigen Reaktionsgemisch benetzt werden. Nach der Befüllung der Form wurde diese verschlossen und die zwei Reaktionsmischungen zur Umsetzung gebracht. Das Formwerkzeug wies im unteren Teil der Form eine Temperatur von 41 °C, im oberen Teil der Form eine Temperatur von 39 °C auf. Nach ca. 140 Sekunden, also zum Zeitpunkt, an dem die reagierenden Schaumsysteme ihren höchsten Treibgasdruck aufgebaut haben, wurde die Trägerschicht zum Entgasen des Bauteils punktiert.

In der Tabelle 2 sind die technischen Daten zur Befüllung der Form aufgelistet.

**Tabelle 2**

| Reaktionsmischung | 1 | 2 |
|---|---|---|
| Austrag [g/s] | 250 | 250 |
| Druck A-Komponente [bar] | 170 | 170 |
| Druck B-Komponente [bar] | 170 | 150 |
| Temperatur A-Komponente [°C] | 23 | 18 |
| Temperatur B-Komponente [°C] | 19 | 20 |
| Startzeit [s] | 10 | 12 |
| Steigzeic [s] | 100 | 90 |
| Dichte, freiverschäumt [kg/m³] | 71 | 67 |
| Schußgewicht [g] | 800 | 1000 |

Die erfindungsgemäße Armaturentafel wies in der Mitte des Bauteils eine klare Trennlinie zwischen den verschiedenen Reaktionsprodukten der Reaktionsmischung 1 und 2 auf. Ein Übergang zwischen den Produkten war allerdings wie erwünscht nicht zu spüren. Somit konnte eine Armaturentafel mit unterschiedlichen mechanischen Werten in zwei Teilbereichen ohne Beeinträchtigung der Haptik und Optik hergestellt werden.
- Unterschiedliche mechanische Eigenschaften in verschiedenen Bereichen der Armaturentafel möglich
- Gewichts- und Kosteneinsparung durch ortsabhängig eingetragene Schaumsysteme
- Hohe mechanische Eigenschaften im Bereich des Hidden-Airbag und niedrigdichte Schaumsysteme im übrigen Bereich der Armaturentafel
- Praktisch gleichzeitiger Eintrag verschiedener Schaumsystemen; dadurch keine Erhöhung der Entformzeiten
- Aufwendiges Plazieren von Trennelementen zwischen den Reaktionsmischungen in der Form überflüssig
- Hervorragende Haftung zwischen den verschiedenen Polyisocyanat-Polyadditionsprodukte in den Formkörpern

## Patentansprüche

1. Armaturentafeln enthaltend mindestens zwei direkt miteinander verbundene Polyisocyanat-Polyadditionsprodukte unterschiedlicher mechanischer und physikalischer Eigenschaften, die in einer Form in einem parallelen Verfahren hergestellt wurden.

2. Armaturentafeln nach Anspruch 1, wobei es sich bei den Polyisocyanat-Polyadditionsprodukten um halbharte Schaumstoffe handelt.

3. Verfahren zur Herstellung von Armaturentafeln enthaltend mindestens zwei direkt miteinander verbundene Polyisocyanat-Polyadditionsprodukte unterschiedlicher Eigenschaften, wobei man in einer Form parallel mindestens zwei verschiedene Reaktionsmischungen enthaltend jeweils (a) Isocyanate, (b) gegenüber Isocyanaten reaktiven Verbindungen und gegebenenfalls (c) Treibmittel, (d) Katalysatoren, (e) Hilfsmittel und/oder Zusatzstoffe zur Umsetzung bringt.

4. , Verfahren nach Anspruch 3, **dadurch gekennzeichnet, daß** sich die Reaktionsmischungen in der Zusammensetzung der gegenüber Isocyanaten reaktiven Verbindungen (b) und/oder den Isocyanaten (a) unterscheiden.

5. Verfahren nach Anspruch 3 oder 4, **dadurch gekennzeichnet**, das die Start- und Steigzeiten der verschiedenen Reaktionsmischungen maximal 20 % voneinander abweichen.

6. Verfahren nach einem der Ansprüche 3 bis 5, **dadurch gekennzeichnet, daß** man die Reaktionsmischungen durch getrennte Mischköpfe an verschiedenen Positionen oder mit einem Mehrkomponentenmischkopf mit getrennten Komponentenkreisläufen in die Form einbringt, wobei die in die Form eingetragenen Reaktionsmischungen in der Form in direktem Kontakt zueinander gebracht werden.

7. Verfahren nach einem der Ansprüche 3 bis 6, **dadurch gekennzeichnet, daß** man die Umsetzung in Abwesenheit von Einrichtungen, die ein Vermischen der verschiedenen Reaktionsmischungen in der Form verhindern, durchführt.

## Claims

1. A dashboard comprising at least two polyisocyanate polyaddition products directly bonded to one another and having different mechanical and physical properties, produced in a parallel process in a mold.

2. A dashboard as claimed in claim 1, wherein the polyisocyanate polyaddition products are semirigid foams.

3. A process for producing dashboards comprising at least two polyisocyanate polyaddition products directly bonded to one another and having different mechanical and physical properties, which comprises reacting, in parallel in a mold, at least two different reaction mixtures each comprising (a) isocyanates, (b) compounds reactive to isocyanates, and, if desired, (c) blowing agents, (d) catalysts, (e) auxiliaries and/or additives.

4. A process as claimed in claim 3, wherein the reaction mixtures differ in the composition of the compounds (b) reactive to isocyanates and/or in the isocyanates (a).

5. A process as claimed in claim 3 or 4, wherein the start times and rise times of the different reaction mixtures differ from one another by not more than 20%.

6. A process as claimed in any of claims 3 to 5, wherein the reaction mixtures are introduced into the mold via separate mixing heads at different locations or using a mixing head designed for more than one component and with separate circuits for the components, where the reaction mixtures introduced into the mold are brought into direct contact with one another in the mold.

7. A process as claimed in any of claims 3 to 6, wherein the reaction is carried out in the absence of equipment which prevents mixing of the different reaction mixtures in the mold.

## Revendications

1. Tableaux de bord contenant au moins deux produits de polyaddition de polyisocyanates reliés directement l'un avec l'autre, présentant des propriétés mécaniques et physiques différentes, qui sont préparés dans un moule dans un procédé parallèle.

2. Tableaux de bord selon la revendication 1, dans lesquels les produits de polyaddition de polyisocyanates sont des mousses semi-rigides.

3. Procédé pour la fabrication de tableaux de bord contenant au moins deux produits de polyaddition de polyisocyanates reliés directement l'un avec l'autre, présentant des propriétés différentes, dans lequel on fait réagir dans un moule, en parallèle, au moins deux mélanges réactionnels différents, contenant à chaque fois (a) des isocyanates, (b) des composés réactifs par rapport aux isocyanates et, le cas échéant, (c) des agents moussants, (d) des catalyseurs, (e) des adjuvants et/ou des additifs.

4. Procédé selon la revendication 3, **caractérisé en ce que** les mélanges réactionnels se distinguent dans la composition par les composés (b) réactifs par rapport aux isocyanates et/ou par les isocyanates (a).

5. Procédé selon la revendication 3 ou 4, **caractérisé en ce que** les temps de démarrage et de montée des différents mélanges réactionnels s'écartent l'un de l'autre d'au maximum 20 %.

6. Procédé selon l'une quelconque des revendications 3 à 5, **caractérisé en ce qu'**on introduit les mélanges réactionnels via des têtes de mélange séparées en différents endroits ou via une tête de mélange à plusieurs composants avec des circuits de composants séparés dans le moule, les mélanges réactionnels introduits dans le moule étant mis en contact direct les uns avec les autres dans le moule.

7. Procédé selon l'une quelconque des revendications 3 à 6, **caractérisé en ce qu'**on effectue la transformation en l'absence de dispositifs, qui empêchent un mélange des différents mélanges réactionnels dans le moule.
